# EUROPÄISCHE PATENTANMELDUNG

(11) **EP 1 887 345 A1**
(43) Veröffentlichungstag der Anmeldung: **13.02.2008**
(21) Anmeldenummer: 06118393.5
(22) Anmeldetag: 03.08.2006
(51) Int. Cl.: G01N 21/88, G01N 21/90

(54) **Verfahren und Vorrichtung zur Werkstückprüfung und/oder - kontrolle**

(71) Anmelder: Finatec Holding GmbH, 2555 Brügg b. Biel (CH)
(72) Erfinder: Kaufmann, Raffael, 4562, Biberist (CH); Maibach, Fridolin, 2560, Nidau (CH); Hermle, Matthias, 2562, Port (CH)
(74) Vertreter: Scheuzger, Beat Otto

(57) **Zusammenfassung**

Die Erfindung bezieht sich auf ein Verfahren zur Werkstückprüfung und/oder -kontrolle, in welchem ein Werkstück (40) mittels einer Transporteinrichtung (30) befördert, und mittels mindestens einer Lichtquelle (50) beleuchtet wird, und in welchem mittels einer Analyseeinheit (60) ein Bild des Werkstücks **(40) aufgenommen, verarbeitet und ausgewertet wird. In diesem Verfahren wird** mittels einer optischen Einrichtung (20) ein Abbild (44) von mindestens einer Seitenoberfläche (42) des Werkstücks (40) erzeugt, und das erzeugte Abbild (44) der mindestens einen Seitenoberfläche (42) des Werkstücks (40) mittels der Analyseeinheit (60) aufgenommen, verarbeitet und ausgewertet. Dabei wird das Abbild (44) der mindestens einen Seitenoberfläche (42) des Werkstücks (40) beispielsweise mittels eines Rundspiegels (21) erzeugt. Auch können in der optischen Einrichtung (20) eine oder mehrere Lichtquellen (26) mit gleichen oder verschiedenen Eigenschaften integriert und das Licht mittels eines Diffusors (25) gestreut werden.

## Beschreibung

### Technisches Gebiet

Diese Erfindung betrifft ein Verfahren und eine Vorrichtung zur Werkstückprüfung und/oder -kontrolle. Insbesondere betrifft diese Erfindung ein Verfahren und eine Vorrichtung zur Werkstückprüfung und/oder -kontrolle, in welchen ein Werkstück mittels einer Transporteinrichtung befördert, und mittels mindestens einer Lichtquelle beleuchtet wird, und in welchen mittels einer Analyseeinheit ein Bild des Werkstücks aufgenommen, verarbeitet und ausgewertet wird.

### Stand der Technik

Die so genannte zerstörungsfreie Werkstückprüfung bzw. -kontrolle spielt heute bei der Qualitätssicherung in der industriellen Fertigung eine äusserst wichtige Rolle. Insbesondere weist diese zerstörungsfreie Werkstückprüfung einige wichtige Vorteile gegenüber einer herkömmlichen Stichprobenprüfung auf. Einerseits ermöglicht diese zerstörungsfreie Werkstückprüfung eine Kontrolle jedes einzelnen Werkstücks, also eine 100%ige Prüfung. Zudem behalten alle geprüfte Werkstücke ihre gesamte Funktionstüchtigkeit und dadurch auch ihren Gebrauchswert. Oft werden diese zerstörungsfreien Prüfverfahren im Rahmen der Produktion eingesetzt, um gegebenenfalls eine Korrektur des Prozesses einzuleiten und somit eine gleich bleibende Qualität zu sichern.

Für die Funktionalität und Ästhetik von technischen Objekten spielt die Qualität der Oberfläche eine wesentliche Rolle. Deshalb ist die Oberflächenprüfung heutzutage in vielen Branchen der Industrie für eine zuverlässige Qualitätskontrolle, Identifikation und Messung unverzichtbar. Bei den zerstörungsfreien Oberflächenprüfverfahren nehmen insbesondere optische Prüfverfahren einen sehr wichtigen Platz ein. Diese Verfahren ermöglichen grundsätzlich eine detaillierte Prüfung von Oberflächen auf Defekte, wie beispielsweise Kratzer, Risse und Löcher.

Bei den optischen Prüfverfahren werden typischerweise komplexe Prüfsysteme eingesetzt, die aus einer oder mehreren Kameras, besonders angepassten Beleuchtungseinheiten und speziellen Bildverarbeitungsprozessoren bestehen. Es werden oft auch Transporteinrichtungen eingesetzt, welche zum Transport der zu prüfenden Werkstücke durch das Prüfsystems verwendet werden. Während des Transports nehmen die Kameras statische oder dynamische Bilder der Werkstücke auf und leiten sie an die Bildverarbeitungsprozessoren weiter. Diese verwenden besondere Prüfalgorithmen, um die Präsenz von Defekten anhand der gelieferten Bilder und den vorgegebenen Qualitätsstandards zu detektieren. Eine besondere Aussortiervorrichtung entfernt die detektierten fehlerhaften Werkstücke aus dem System. Die Prüfgeschwindigkeit spielt dabei eine äusserst wichtige Rolle, da der Herstellungsprozess wegen der Qualitätsprüfung grundsätzlich etwas verlangsamt wird.

Jedoch ist eine Oberflächenprüfung von dreidimensionalen Objekten äusserst kompliziert, da viele Seitenoberflächen äusserst selten mit einer einzigen Kamera erfasst werden können. In vielen herkömmlichen Prüfsystemen werden zur Lösung dieses Problems beispielsweise mehrere Kameras verwendet, mit welchen Bilder von verschiedenen Seitenoberflächen des Werkstücks aufgenommen werden können. Selbstverständlich verteuert die Verwendung von mehreren Kameras das gesamte Prüfsystem erheblich. Ausserdem müssen für eine gleichzeitige Verarbeitung von mehreren Bildern auch besonders leistungsfähige Bildverarbeitungsprozessoren verwendet werden, wodurch die Systeme nochmals verteuert werden. Ansonsten muss mit einer deutlich kleineren Prüfgeschwindigkeit gerechnet werden, was sich negativ auf die Produktionskosten auswirkt. Andere Prüfsysteme verwenden spezielle Transportvorrichtungen, mit welchen die zu prüfenden Werkstücke während dem Transport gedreht werden können. So können mit einer einzigen Kamera Bilder desselben Werkstücks aus vielen verschiedenen Richtungen aufgenommen und danach entsprechend verarbeitet werden. Selbstverständlich werden die Prüfsysteme durch die Verwendung von besonders komplizierten Transportvorrichtungen zusätzlich verteuert. Darüber hinaus muss in diesem Fall mit einer erheblichen Verlangsamung des Prüfverfahrens gerechnet werden.

Nicht zuletzt ist die optische Oberflächenprüfung bzw. -kontrolle bei Werkstücken mit einer gekrümmten Oberfläche besonders anspruchsvoll. Bei der Aufnahme von Bildern solcher Oberflächen können bedeutende Verzerrungen auftreten, die sich auf die anschliessende Bildverarbeitung und -analyse negativ auswirken können. Ausserdem können Bilder gewisser Oberflächen aufgrund der besonders unvorteilhaften Geometrie des Werkstücks gar nicht mithilfe von Kameras aufgenommen werden.

### Offenbarung der Erfindung

Es ist demnach eine Aufgabe der vorliegenden Erfindung, ein neues Verfahren und eine neue Vorrichtung zur Werkstückprüfung und/oder -kontrolle vorzuschlagen, welche nicht die Nachteile des Standes der Technik aufweisen. Insbesondere ist eine Aufgabe der vorliegenden Erfindung, ein neues Verfahren und eine neue Vorrichtung zur Werkstückprüfung und/oder -kontrolle vorzuschlagen, welche eine schnelle, präzise, effiziente und zuverlässige Prüfung bzw. -kontrolle von Werkstücken mit einer gekrümmten Oberfläche gewährleisten.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele der Erfindung dadurch erreicht, dass im Verfahren zur Werkstückprüfung und/oder -kontrolle, in welchem ein Werkstück mittels einer Transporteinrichtung befördert, und mittels mindestens einer Lichtquelle beleuchtet wird, und in welchem mittels einer Analyseeinheit ein Bild des Werkstücks aufgenommen, verarbeitet und ausgewertet wird, mittels einer optischen Einrichtung ein Abbild von mindestens einer Seitenoberfläche des Werkstücks erzeugt wird, und das erzeugte Abbild der mindestens einer Seitenoberfläche des Werkstücks mittels der Analyseeinheit aufgenommen, verarbeitet und ausgewertet wird. Der Vorteil dieser Erfindung liegt insbesondere darin, dass mindestens eine Seitenoberfläche des Werkstücks ebenfalls geprüft bzw. kontrolliert werden kann. Dies ist besonders vorteilhaft bei gekrümmten Oberflächen, die sonst nur schwierig kontrolliert werden können. Indem ein ebenes Abbild der gekrümmten Seitenoberfläche des Werkstücks erzeugt und mittels der Analyseeinheit aufgenommen wird, können die Fehler auch auf dieser gekrümmten Oberfläche mittels geeigneter Bildverarbeitungsalgorithmen detektiert und die fehlerhaften Werkstücke aussortiert werden.

In einer Ausführungsvariante der vorliegenden Erfindung wird das Abbild der mindestens einen Seitenoberfläche des Werkstücks mittels einer Refraktionseinheit der optischen Einrichtung angepasst. Diese Refraktionseinheit kann beispielsweise als eine besondere Linse oder eine Kombination von Linsen ausgebildet sein. Es können jedoch auch andere Komponenten verwendet werden, welche die gleiche Funktionalität aufweisen. Diese Ausführungsvariante hat insbesondere den Vorteil, dass die eventuellen Verzerrungen, die beim Abbilden der gekrümmten Oberfläche des Werkstücks entstehen, sofort korrigiert werden können. Dadurch werden die Genauigkeit und die Geschwindigkeit der Prüfung wesentlich erhöht. Es können auch einfachere Bildverarbeitungsalgorithmen verwendet werden, die auch weniger Ressourcen beanspruchen.

In einer anderen Ausführungsvariante der vorliegenden Erfindung wird das Abbild der mindestens einen Seitenoberfläche des Werkstücks mittels mindestens eines Spiegels erzeugt. Diese Ausführungsvariante hat insbesondere den Vorteil, dass das Abbild der Seitenoberfläche durch eine Spiegelung erzeugt werden kann. Die Spiegel sind wohlbekannte Komponenten, welche auch keine besondere Wartung benötigen. Ein Abbild der dem Spiegel zugewandten Oberfläche wird automatisch erzeugt, ohne dass dies aktiv veranlasst werden müsste. Auch benötigt ein Spiegel in diesem Zusammenhang keine Stromversorgung.

In einer wieder anderen Ausführungsvariante der vorliegenden Erfindung wird das Abbild der mindestens einen Seitenoberfläche des Werkstücks mittels mindestens eines Rundspiegels erzeugt. Der Vorteil dieser Ausführungsvariante liegt insbesondere darin, dass auch Werkstücke mit einer runden Seitenoberfläche effizient geprüft bzw. kontrolliert werden können. Beispielsweise können zylindrische oder beinahe zylindrische Werkstücke mittels eines Rundspiegels besonders vorteilhaft kontrolliert werden.

In einer weiteren Ausführungsvariante der vorliegenden Erfindung wird mittels der Analyseeinheit gleichzeitig mit dem Abbild der mindestens einen Seitenoberfläche ein Bild der Oberseite des Werkstücks aufgenommen, verarbeitet und ausgewertet. Diese Ausführungsvariante hat insbesondere den Vorteil, dass zur Prüfung der gesamten Oberfläche des Werkstücks ein einziges Bild benötigt wird. Dadurch werden einerseits die Bildaufnahme-, und andererseits die Bildauswertungszeit verkürzt, was eine grössere Prüfgeschwindigkeit zur Folge hat.

In einer anderen Ausführungsvariante der vorliegenden Erfindung ist die optische Einrichtung rotationssymmetrisch ausgebildet. Der Vorteil dieser Ausführungsvariante liegt insbesondere darin, dass insbesondere rotationssymmetrische Werkstücke besonders vorteilhaft abgebildet werden können. Ausserdem spielt die Ausrichtung des Werkstücks bei einer rotationssymmetrischen optischen Einrichtung keine Rolle, da ja das Abbild der Seitenoberflächen des Werkstücks von allen Seiten auf die gleiche Art und Weise erzeugt wird. Damit können die Prüfgeschwindigkeit und -genauigkeit noch weiter gesteigert werden.

In einer wieder anderen Ausführungsvariante der vorliegenden Erfindung ist die Analyseeinheit koaxial zur Symmetrieachse der optischen Einrichtung angeordnet. Diese Ausführungsvariante hat insbesondere den Vorteil, dass das von der optischen Einrichtung erzeugte Abbild der Seitenfläche des Werkstücks von der Analyseeinheit gleichmässig aufgenommen werden kann. Auch entstehen bei dieser Ausführungsvariante insbesondere keine Verzerrungen aufgrund der ungleichen Distanz zwischen den einzelnen Segmenten des Abbilds und der Analyseeinheit. Dadurch können erneut einfachere Bildverarbeitungsalgorithmen verwendet werden, was wiederum in einer schnelleren, präziseren und effizienteren Werkstückprüfung bzw. -kontrolle resultiert.

In einer weiteren Ausführungsvariante der vorliegenden Erfindung wird das Werkstück mittels mindestens einer in der optischen Einrichtung integrierten Lichtquelle beleuchtet. Diese Ausführungsvariante hat insbesondere den Vorteil, dass die in der optischen Einrichtung integrierte Lichtquelle genau an die optische Einrichtung angepasst werden kann, wodurch eine bessere Prüfqualität erreicht werden kann.

In einer anderen Ausführungsvariante der vorliegenden Erfindung ist die in der optischen Einrichtung integrierte Lichtquelle rotationssymmetrisch ausgebildet. Der Vorteil dieser Ausführungsvariante liegt insbesondere darin, dass die Beleuchtung des zu prüfenden bzw. zu kontrollierenden Werkstücks von allen Seiten gleichmässig gestaltet werden kann. Beispielsweise bei Werkstücken mit runder Seitenoberfläche können dadurch optimalste Beleuchtungsverhältnisse erzeugt werden. Und ausserdem spielt die Ausrichtung des Werkstücks in diesem Fall wiederum keine Rolle, wodurch eine noch grössere Geschwindigkeit und Effizienz bei der Prüfung bzw. Kontrolle erreicht werden kann.

In einer weiteren Ausführungsvariante der vorliegenden Erfindung wird zur Beleuchtung des Werkstücks das Licht mittels mindestens eines Diffusors gestreut. Diese Ausführungsvariante hat insbesondere den Vorteil, dass das Licht optimal auf der Oberfläche des Werkstücks gestreut werden kann. So kann Ein vollkommen homogenes und verzerrungsfreies Abbild der Seitenoberfläche erzeugt werden, wodurch die Präzision und Genauigkeit des Prüfverfahrens wiederum gesteigert werden können.

In einer anderen Ausführungsvariante der vorliegenden Erfindung werden mittels der Analyseeinheit mehrere Bilder desselben Werkstücks aufgenommen, verarbeitet und ausgewertet, wobei die Beleuchtung des Werkstücks zur Aufnahme jedes der mehreren Bilder des Werkstücks variiert wird. Diese Ausführungsvariante hat insbesondere den Vorteil, dass beispielsweise eine Parallelauswertung mittels verschiedener Algorithmen möglich wird. Auch kann jedes aufgenommene Bild zur Prüfung besonderer Aspekte der Oberfläche verwendet werden. Ausserdem können gemäss dieser Ausführungsvariante auch verschiedenartige Bilder desselben Werkstücks aufgenommen werden. Beispielsweise können in diesem Fall Bildverarbeitungsalgorithmen eingesetzt werden, die zur Auswertung eine Kombination von verschiedenen Bildern desselben Werkstücks verwenden. Auch diese Ausführungsvariante kann die Geschwindigkeit und Effizienz des Prüfverfahrens besonders vorteilhaft beeinflussen.

In einer wieder anderen Ausführungsvariante der vorliegenden Erfindung wird das Werkstück gleichzeitig mittels mindestens zwei Lichtquellen beleuchtet, wobei jede Lichtquelle verschiedene Lichteigenschaften aufweist. Der Vorteil dieser Ausführungsvariante liegt insbesondere darin, dass im erfassten Bild des Werkstücks eine Kombination von verschiedenartigen Beleuchtungen zur effizienteren Auswertung verwendet werden kann. Insbesondere kann ein so aufgenommenes Bild des Werkstücks auch in seine Komponenten zerlegt werden, welche nach Bedarf separat verarbeitet und ausgewertet werden können. Auch in diesem Fall können beispielsweise Bildverarbeitungsalgorithmen eingesetzt werden, die diese Bildeigenschaften zur Defektdetektierung besonders effizient verwenden können.

An dieser Stelle soll erwähnt werden, dass sich die vorliegende Erfindung neben dem beschriebenen erfindungsgemässen Verfahren zur Werkstückprüfung und/oder -kontrolle auch auf eine entsprechende Vorrichtung zur Werkstückprüfung und/oder -kontrolle bezieht.

### Kurze Beschreibung der Zeichnung

Nachfolgend werden Ausführungsvarianten der vorliegenden Erfindung anhand von Beispielen beschrieben. Die Beispiele der Ausführungen werden durch folgende beigelegte Figuren illustriert:
Figur 1 zeigt schematisch einen Querschnitt durch eine Vorrichtung zur Werkstückprüfung und/oder -kontrolle gemäss einer ersten Ausführungsvariante der vorliegenden Erfindung.
Figur 2 zeigt schematisch ein Werkstück in Drauf- und Seitensicht, sowie das in der Vorrichtung zur Werkstückprüfung und/oder -kontrolle aus Figur 1 erzeugte Abbild dessen Seitenoberfläche.
Figur 3 zeigt schematisch einen Querschnitt durch eine Vorrichtung zur Werkstückprüfung und/oder -kontrolle gemäss einer zweiten Ausführungsvariante der vorliegenden Erfindung.
Figur 4 zeigt einen vergrösserten Ausschnitt eines Bereiches der Vorrichtung zur Werkstückprüfung und/oder -kontrolle aus Figur 3, in welchem schematisch die Beleuchtung eines Werkstücks illustriert wird.
Figur 5 zeigt schematisch einen Querschnitt durch eine Vorrichtung zur Werkstückprüfung und/oder -kontrolle gemäss einer dritten Ausführungsvariante der vorliegenden Erfindung.

### Ausführungsvarianten der Erfindung

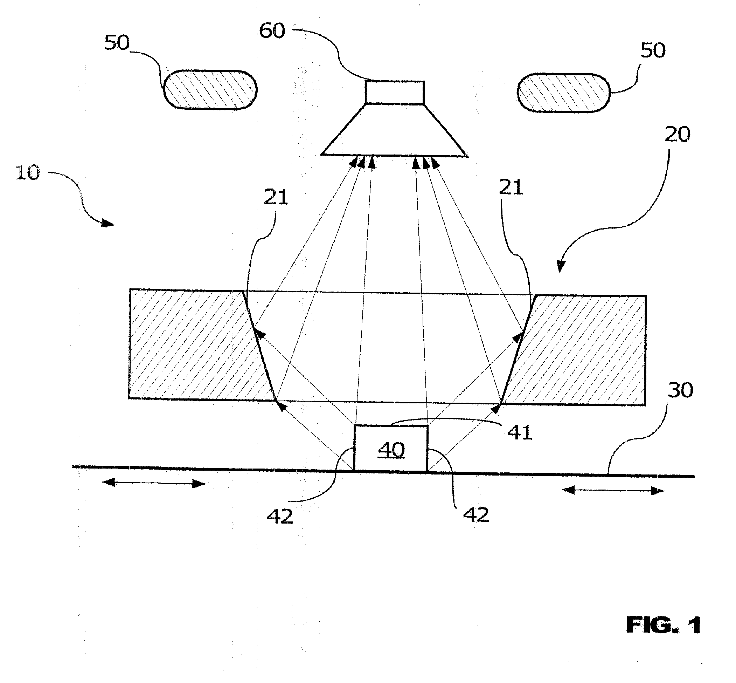

In Figur 1 wird schematisch eine Vorrichtung zur Werkstückprüfung und/oder -kontrolle illustriert, die zur Realisierung des Verfahrens gemäss einer Ausführungsvariante der vorliegenden Erfindung verwendet werden kann. Die zu prüfenden bzw. zu kontrollierenden Werkstücke 40 werden mittels einer geeigneten Einrichtung (nicht gezeigt) in die Vorrichtung zur Werkstückprüfung und/oder -kontrolle 10 eingeführt. Die Vorrichtung 10 umfasst dann eine Transporteinrichtung 30, welche zur Beförderung des zu prüfenden bzw. zu kontrollierenden Werkstücks 40 im Inneren der Vorrichtung 10 eingesetzt wird. Die Transporteinrichtung 30 kann beispielsweise insbesondere als ein Förderband ausgebildet werden, auf welches die Werkstücke 40 gestellt und durch die Vorrichtung 10 transportiert werden. Dabei können die zu prüfenden bzw. zu kontrollierenden Werkstücke 40 entweder manuell oder aber durch dazu geeignete Einrichtungen auf die Transporteinrichtung 30 gebracht werden. Es ist auch insbesondere eine Lösung möglich, bei welcher die Werkstücke 40 unmittelbar von der Herstellungsanlage auf die Transporteinrichtung 30 gebracht und damit in die Vorrichtung zur Werkstückprüfung und/oder -kontrolle 10 eingeführt werden. In der Vorrichtung zur Werkstückprüfung und/oder -kontrolle 10 werden die zu prüfenden bzw. zu kontrollierenden Werkstücke 40 geprüft und/oder kontrolliert und die fehlerhaften Werkstücke 40 aussortiert. Dies geschieht grundsätzlich mittels einer Aussortiereinrichtung (nicht gezeigt), welche die defekten Werkstücke 40 von der Transporteinrichtung 30 entfernt. Dieses Aussortieren kann beispielsweise insbesondere durch einen kurzen, gezielten Druckluftstoss erfolgen, so dass das defekte Werkstück 40 von der Transporteinrichtung 30 weggeblasen und anschliessend entsorgt wird. Zweifellos sind aber auch andersartige Aussortiereinrichtungen denkbar, solange sie alle Anforderungen des Prüf- bzw. Kontrollverfahrens insbesondere im Bezug auf die Geschwindigkeit, Effizienz und Sicherheit erfüllen. Die Werkstücke 40, die die Prüfung und/oder Kontrolle erfolgreich bestanden haben, werden mittels der Transporteinrichtung 30 aus der Vorrichtung 10 herausgeführt.

Die Vorrichtung zur Werkstückprüfung und/oder -kontrolle 10 umfasst neben der Transporteinrichtung 30 mindestens eine Lichtquelle 50. Die mittels der Transporteinrichtung 30 beförderten Werkstücke 40 werden bei ihrem Durchgang durch die Vorrichtung 10 durch die Lichtquelle 50 beleuchtet. Die Lichtquelle 50 kann grundsätzlich als jede herkömmliche Einrichtung zur Lichterzeugung ausgebildet werden, solange durch das erzeugte Licht die für die Prüfung und/oder Kontrolle der Werkstücke 40 notwendigen Erfordernisse erfüllt. Insbesondere muss das erzeugte Licht alle Komponente des Lichtspektrums aufweisen, welche in der anschliessenden Analyse die Entdeckung der Defekte ermöglichen. Die Lichtquelle 50 kann insbesondere, wie in Figur 1 schematisch dargestellt, um ein Mittelpunkt punkte- oder rotationssymmetrisch angeordnet sein. Dadurch kann unter anderem auf einfachste Weise garantiert werden, dass die zu prüfenden bzw. zu kontrollierenden Werkstücke 40 von allen Seiten gleichmässig und homogen beleuchtet werden. Eine Direkte Konsequenz davon ist es, dass die Ausrichtung der Werkstücke 40 auf der Transporteinrichtung 30 bei der Prüfung bzw. Kontrolle grundsätzlich keine Rolle spielt, wodurch sowohl die Qualität als auch die Geschwindigkeit der Werkstückprüfung und/oder -kontrolle deutlich gesteigert werden können.

Neben der Transporteinrichtung 30 und der Lichtquelle 50 umfasst die Vorrichtung zur Werkstückprüfung und/oder -kontrolle 10 auch noch eine Analyseeinheit 60. Mittels dieser Analyseeinheit 60 kann zur Prüfung und/oder -kontrolle ein Bild des Werkstücks 40 aufgenommen, verarbeitet und ausgewertet werden. Dazu umfasst die Analyseeinheit 60 typischerweise eine Kamera, welche zur Aufnahme von einem oder mehreren Bildern des zu prüfenden bzw. zu kontrollierenden Werkstücks 40 verwendet wird. Grundsätzlich wird das Bild des Werkstücks 40 mittels der Analyseeinheit 60 so aufgenommen, dass die zu prüfende und/oder zu kontrollierende Oberfläche darauf gesehen werden kann. Wenn dieses Bild des Werkstücks 40 beispielsweise von einer Kamera aufgenommen wird, die sich oberhalb des Werkstücks 40 befindet, so wird ein Bild der Oberseite 41 des Werkstücks 40 gemacht. Daraufhin kann dieses Bild ausgewertet werden und die Defekte an der Oberseite 41 des Werkstücks 40 detektiert werden. Ausser der Kamera zur Bildaufnahme umfasst die Analyseeinheit 60 normalerweise noch eine Bildverarbeitungseinrichtung. Diese Bildverarbeitungseinrichtung nimmt die mittels der Kamera aufgenommenen Bilder und unterzieht sie einer entsprechenden Verarbeitung, welche notwendig ist, um die Defekte im Werkstück 40 entdecken zu können. In diesem Zusammenhang sind verschiedene Bildverarbeitungsmechanismen möglich, beispielsweise Analogzu-digital-Umwandlung oder ähnliches. Schliesslich umfasst die Analyseeinheit 60 neben einer Kamera und einer Bildverarbeitungseinrichtung auch ein Auswertungsmodul, welches zur Auswertung der Bilder des zu prüfenden bzw. zu kontrollierenden Werkstücks 40 verwendet wird. Das Auswertungsmodul verwendet dazu entsprechende Algorithmen, welche beispielsweise für jede Art von Werkstücken 40 anders sein kann. Selbstverständlich können aber auch für dieselben Werkstücke 40 verschiedene Algorithmen verwendet werden. Nach Bedarf können die verwendeten Algorithmen geändert und ausgetauscht werden.

In Figur 1 bezieht sich das Bezugszeichen 20 auf eine optische Einrichtung. Mittels dieser optischen Einrichtung 20 kann beispielsweise auch ein einheitliches Abbild 44 einer Seitenoberfläche 42 des Werkstücks 40 erzeugt werden. Danach kann mittels der Analyseeinheit 60 bzw. der dazugehörenden einzigen Kamera ein Bild dieses Abbilds 44 gemacht und anschliessend verarbeitet und ausgewertet werden. Auf diese Weise können selbst gekrümmte Seitenoberflächen 42 des zu prüfenden bzw. zu kontrollierenden Werkstücks 40 mit einer einzigen Kamera auf Defekte und Fehler geprüft werden. Insbesondere eignet sich eine solche Vorrichtung 10 zur Prüfung und/oder Kontrolle von kleineren runden Objekten, wie zum Beispiel Flaschenverschlüssen oder ähnlichen Gegenständen. Es können aber natürlich auch andere Objekte mit gekrümmten oder geraden Oberflächen geprüft und/oder kontrolliert werden.

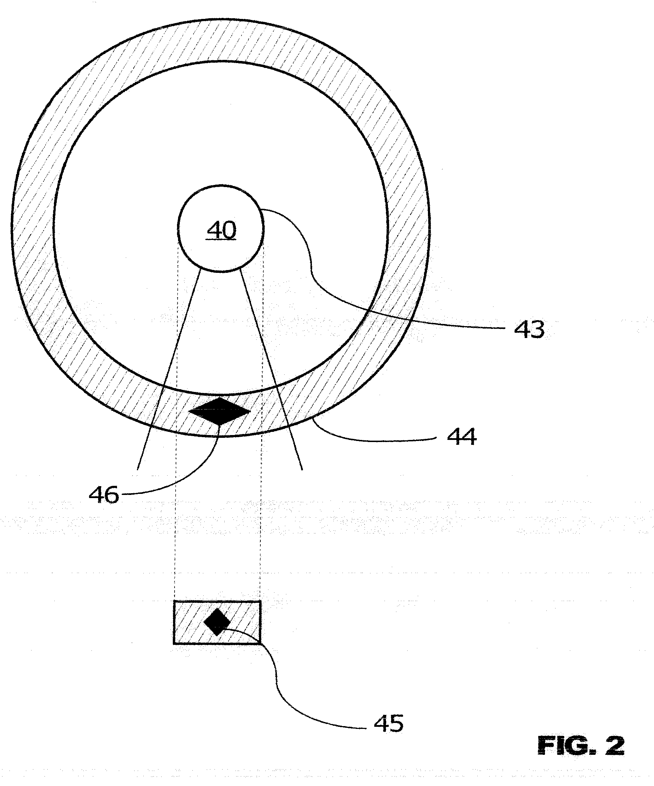

Im konkreten Beispiel der Figur 1 umfasst die optische Einrichtung 20 einen Rundspiegel 21. Der Rundspiegel 21 ist fähig, ein Abbild 44 der Manteloberfläche 42 des zu prüfenden bzw. zu kontrollierenden Werkstücks 40 zu erzeugen. Die Erzeugung dieses Abbilds 44 wird in Figur 2 noch deutlicher erläutert. Dieser Rundspiegel 21 wird so ausgebildet, dass in dessen Mitte eine Öffnung entsteht. Durch diese Öffnung ist die Oberseite 41 des zu prüfenden Werkstücks 40 von der Analyseeinheit 60 aus sichtbar. So kann während des Durchlaufs der zu prüfenden bzw. zu kontrollierenden Werkstücke 40 unter der optischen Einrichtung 20 mittels der Analyseeinrichtung 60 auch ein Bild dieser Oberseite 41 aufgenommen, verarbeitet und ausgewertet werden. Besonders vorteilhaft ist diese Ausführungsvariante, da mittels einer einzigen Kamera der Analyseeinheit 60 ein Bild aufgenommen werden kann, auf welchem sowohl das Abbild 44 der Seitenoberfläche 42 als auch ein direktes Bild der Oberseite 41 des Werkstücks 40 zu sehen sind. In der anschliessenden Verarbeitung und Auswertung dieses einen einzigen Bildes können also die Defekte auf sämtlichen zu prüfenden bzw. zu kontrollierenden Oberflächen 41, 42 des Werkstücks 40 entdeckt werden. Selbstverständlich kann in der optischen Einrichtung 20 anstatt eines Rundspiegels 21 auch eine Zusammensetzung mehrerer kleiner gerader Spiegel verwendet werden, mittels welchen ebenfalls ein Abbild 44 der Seitenoberfläche 42 des Werkstücks 40 erzeugt werden kann.

Der Rundspiegel 21 kann im Wesentlichen aus Aluminium gebaut werden. Die Masse des Rundspiegels 21 können flexibel und an die Masse des zu prüfenden bzw. zu kontrollierenden Werkstücks 40 angepasst werden. Dadurch kann dieser Rundspiegel 21 auch einfach spezifisch hergestellt werden. Der Rundspiegel 21 kann ausserdem insbesondere auch mittels einer besonderen Beschichtung an die besonderen Erfordernisse angepasst werden. Es soll ja grundsätzlich ein Rundspiegel 21 hergestellt werden, welcher eine bis über 99%-reflektive Oberfläche aufweist. Jedoch sind nach Bedarf auch andere Ausführungsvarianten denkbar. Die Beschichtung kann aber andererseits auch dazu dienen, den Rundspiegel 21 vor Oxidation zu schützen. Beispiele für besonders geeignete Materialien und/oder die Beschichtung des Rundspiegels 21 sind poliertes Aluminium mit Schutzbeschichtung, aufgedampftes Aluminium mit Schutzbeschichtung, Siliziumoxid Tantaloxid oder aber Gold. Der Aufbau des Rundspiegels 21 aus Aluminium ist absolut robust und hält sogar sehr starken mechanischen Beanspruchungen (wie zum Beispiel Materialstau) stand. Ausserdem können sogar auch überdurchschnittliche thermisch Schwankungen problemlos standhalten, was zum Beispiel bei Glas, dem typischen Werkstoff für Spiegel, nicht gegeben ist.

Das Abbild 44 der Seitenoberfläche 42 des Werkstücks 40 kann durch die Spiegelung im Rundspiegel 21 verzerrt werden. Mittels einer Refraktionseinheit (nicht dargestellt) der optischen Einrichtung 20 kann dieses Abbild 44 angepasst werden. Dabei kann insbesondere auch eine Kombination der entsprechenden Winkel im Rundspiegel 21 und einer dazugehörenden speziellen Linse zur Korrektur verwendet werden. Es sind aber selbstverständlich auch andere Mechanismen zur Verzerrungskorrektur denkbar. Die optische Einrichtung 20 und insbesondere der Rundspiegel 21 können vorteilhaft rotationssymmetrisch ausgebildet sein. Durch diese Rotationssymmetrie hat jede integrale Spiegelfläche des Rundspiegels 21 in jeder Position des zu prüfenden bzw. zu kontrollierenden Werkstücks 40 denselben Abstand zur ihr zugehörenden integralen Abbildungsfläche 44 auf dem Rundspiegel 21. Es müssen keine besonderen Ausrichtungsmechanismen vorgesehen werden, um die Werkstücke 40 in die richtige Position zu bringen. Das Abbild 44 der Seitenoberfläche 42 des Werkstücks 40 hat immer dieselben Eigenschaften, so dass auch die entsprechenden Auswertungsalgorithmen nicht besonders angepasst werden müssen. Ausserdem wird durch den Einsatz eines Rundspiegels 21 der reelle Fehler vergrössert dargestellt, wodurch eine Prüfung von ganz kleinen Fehlern ebenfalls ermöglicht wird. Der Defekt auf der Mantelfläche 42 des Werkstücks 40 wird immer genau gleich abgebildet, unabhängig von der relativen Position auf der Mantelfläche 42. Die Messungen und Analysen sind dadurch vergleichbar und wiederholbar, und die Parametrierung kann einfach und nachvollziehbar realisiert werden. Die Analyseeinheit 60 kann vorteilhaft koaxial mit der Symmetrieachse der optischen Einrichtung 20 angeordnet werden. Die Refraktionseinheit ermöglicht in diesem Fall insbesondere, dass die Oberseite 42 des Werkstücks 44 mittels der Analyseeinheit 60 gleichzeitig mit dem Abbild 44 der Seitenfläche 42 aufgenommen wird, obwohl der optische Weg der Lichtstrahlen in beiden Fällen sehr unterschiedliche Länge aufweist.

Grundsätzlich können mittels der Analyseeinheit 60 auch mehrere Bilder desselben Werkstücks 40 aufgenommen, verarbeitet und ausgewertet werden. Dies kann entweder nacheinander oder gleichzeitig passieren. Dazu können insbesondere auch mehrere Kameras verwendet werden. Auch kann die Beleuchtung des Werkstücks 40 zur Aufnahme jedes dieser mehreren Bilder des Werkstücks 40 variiert werden.

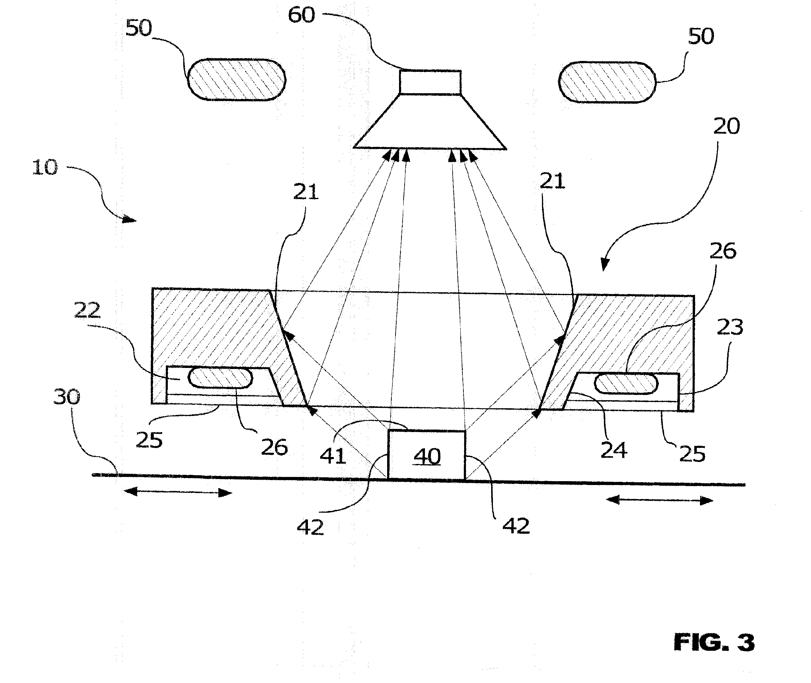

In Figur 3 wird schematisch eine Vorrichtung zur Werkstückprüfung und/oder -kontrolle illustriert, die zur Realisierung des Verfahrens gemäss einer anderen Ausführungsvariante der vorliegenden Erfindung verwendet werden kann. Die Referenzzeichen, die bereits in Figur 1 verwendet worden sind, beziehen sich auch in Figur 3 auf die gleichen Elemente. So beziehen sich das Referenzzeichen 20 auf die optische Einrichtung mit dem Rundspiegel 21, das Referenzzeichen 30 auf die Transporteinrichtung zur Beförderung der Werkstücke 40, das Referenzzeichen 50 auf die Lichtquelle zur Beleuchtung der zu prüfenden bzw. zu kontrollierenden Werkstücke 40 und das Referenzzeichen 60 auf die Analyseeinheit zur Aufnahme, Verarbeitung und Auswertung des Bildes der zu prüfenden bzw. zu kontrollierenden Werkstücke 40. Die optische Einrichtung 20 umfasst in dieser Ausführungsvariante eine integrierte Lichtquelle 26. Insbesondere kann das von der Lichtquelle 26 erzeugte Licht mittels speziellen Reflektoren 23, 24, sowie Diffusoren 25 seitwärts auf das Werkstück gebracht werden. Dadurch können die störenden Reflexionen vermieden werden. Die Lichtquelle 26 kann insbesondere aus Beleuchtungsringen bestehen, welche rotationssymmetrisch um den Rundspiegel 21 angebracht sind. Dabei kann das Symmetriezentrum der Lichtquelle 26 beispielsweise mit dem Symmetriezentrum des Rundspiegels 21 übereinstimmen. Diese Ausführungsvariante garantiert, dass ein absolut homogenes und reflektionsfreies Abbild 44 der Seitenfläche 42 des Werkstücks 40 generiert werden kann. Dies ermöglicht eine genaue und präzise Prüfung und/oder Kontrolle auch von ganz kleinen Flecken oder anderen Defekten auf der Seitenfläche 42 des Werkstücks 40. Der eingesetzte Diffusor 25 kann insbesondere aus splitterfreiem Kunststoff hergestellt werden. Es sind jedoch auch andere Materialien möglich, sobald die entsprechenden Erfordernisse erfüllt sind. Zur homogenen Beleuchtung der Oberseite 41 des Werkstückes 40 kann die integrierte Lichtquelle 26 nach Bedarf insbesondere auch mit einer zusätzlichen rotationssymmetrischen Lichtquelle 50 verwendet werden. Es sind jedoch auch weitere Lichtquellen und andere Kombinationen denkbar. Diese eine oder mehreren zusätzliche Lichtquellen 50 können insbesondere auch mit demselben Symmetriezentrum wie der Rundspiegel 21 angebracht werden. Auch diese zusätzlichen Lichtquellen 50 können die Oberfläche 41 des Werkstücks 40 beispielsweise vorteilhaft unter einem Winkel beleuchten, der vom Ansichtswinkel der Analyseeinheit 60 abweicht, so dass störende Reflexionen vermieden werden.

Auch kann das Werkstück 40 beispielsweise gleichzeitig mittels mindestens zwei Lichtquellen 50, 26 beleuchtet werden, wobei jede Lichtquelle 50, 26 verschiedene Lichteigenschaften, beispielsweise Lichtlänge oder -frequenz aufweist. So kann ein kombiniertes Bild des Werkstücks 40 gemacht werden, welches jedoch bei der Auswertung mit speziellen Methoden (wie zum Beispiel Filterung u.ä.) entsprechend verarbeitet werden kann. So können aus einem einzigen aufgenommenen Bild erst während der Auswertung auch verschiedene Teilbilder mittels der Analyseeinheit 60 erzeugt werden. Diese verschiedene Teilbilder können insbesondere verschiedene Aspekte der Oberflächen 41, 42 des Werkstücks 40 illustrieren, welche für verschiedene Auswertungen verwendet werden können.

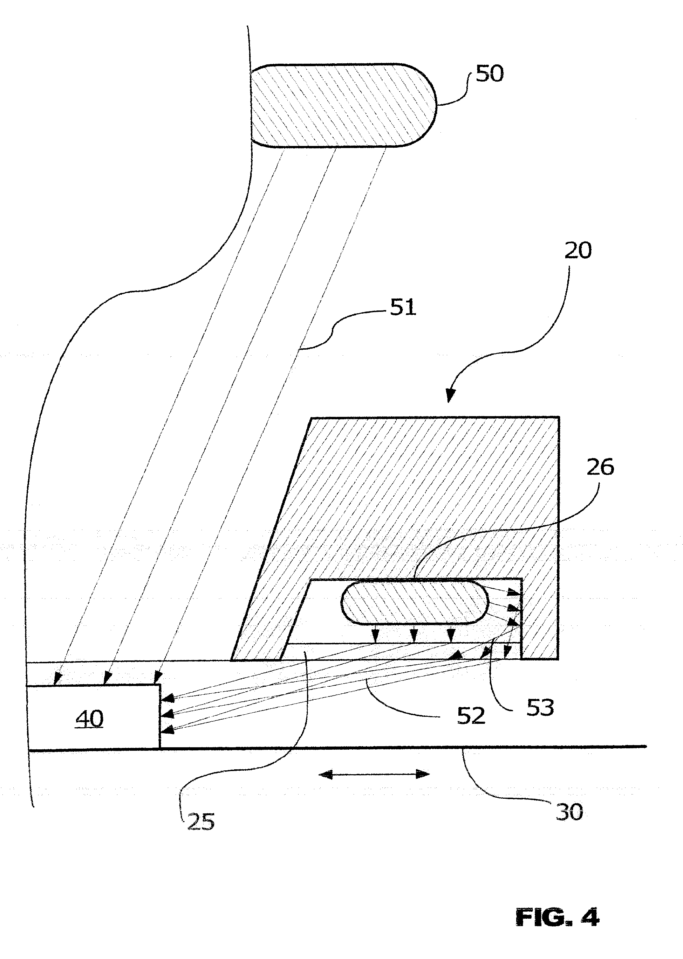

In Figur 4 wird schematisch eine Darstellung der einfallenden Lichtstrahlen auf das Werkstück 40 in einer Vorrichtung zur Werkstückprüfung und/oder -kontrolle 10 aus Figur 3 genauer illustriert. Grundsätzlich wird das Werkstück 40 und insbesondere dessen Oberseite 41 mittels einer Direkteinstrahlung durch die Lichtquelle 50 beleuchtet. Andererseits wird die Seitenfläche 42 des Werkstücks insbesondere mittels der reflektierten und/oder diffundierten Einstrahlung durch die Lichtquelle 26 beleuchtet. Es sind jedoch selbstverständlich auch andere Kombinationen denkbar.

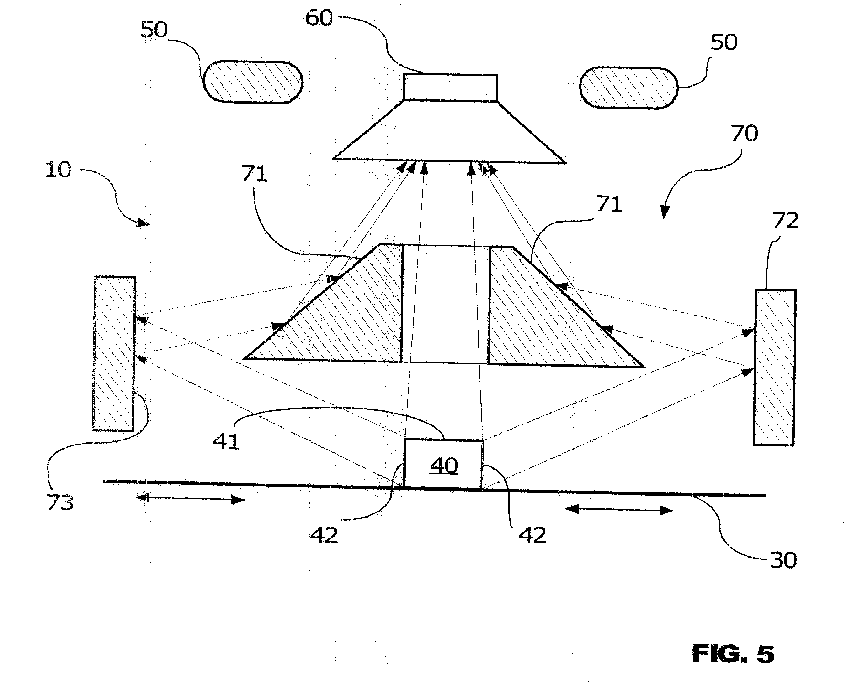

Figur 5 zeigt schliesslich schematisch eine Vorrichtung zur Werkstückprüfung und/oder -kontrolle, die zur Realisierung des Verfahrens gemäss einer weiteren Ausführungsvariante der vorliegenden Erfindung verwendet werden kann. Auch hier beziehen sich die Referenzzeichen, die bereits in Figur 1 und Figur 3 verwendet worden sind, auf die gleichen Elemente. So beziehen sich das Referenzzeichen 30 auf die Transporteinrichtung zur Beförderung der Werkstücke 40, das Referenzzeichen 50 auf die Lichtquelle zur Beleuchtung der zu prüfenden bzw. zu kontrollierenden Werkstücke 40 und das Referenzzeichen 60 auf die Analyseeinheit zur Aufnahme, Verarbeitung und Auswertung des Bildes der zu prüfenden bzw. zu kontrollierenden Werkstücke 40. Diese Ausführungsvariante verwendet eine Anordnung mit zwei Rundspiegeln 71, 72. Grundsätzlich wird durch den Einsatz von zwei Rundspiegeln 71, 72 eine noch bessere Präzision, Geschwindigkeit und Qualität der Prüfung und/oder der Kontrolle erreicht.

Die Erfindung ist nicht auf die beschriebenen Ausführungsformen beschränkt. Dem Fachmann wird ohne weiteres klar sein, dass Weiterentwicklungen und Abänderungen im Rahmen der geschützten Erfindung ohne weiteres möglich sind. Vorrichtungselemente können je nach Bedarf durch andere Elemente ausgetauscht werden, die die gleichen oder ähnlichen Funktionen erfüllen. Zusätzliche Einrichtungen und Elemente können ebenfalls vorgesehen werden. Diese und andere Massnahmen und Elemente fallen in den Schutzbereich der Erfindung, der durch die Patentansprüche definiert wird.

## Patentansprüche

1. Verfahren zur Werkstückprüfung und/oder -kontrolle, in welchem ein Werkstück (40) mittels einer Transporteinrichtung (30) befördert, und mittels mindestens einer Lichtquelle (50) beleuchtet wird, und in welchem mittels einer Analyseeinheit (60) ein Bild des Werkstücks (40) aufgenommen, verarbeitet und ausgewertet wird, **dadurch gekennzeichnet,**
**dass** mittels einer optischen Einrichtung (20) ein Abbild (44) von mindestens einer Seitenoberfläche (42) des Werkstücks (40) erzeugt wird, und
**dass** das erzeugte Abbild (44) der mindestens einen Seitenoberfläche (42) des Werkstücks (40) mittels der Analyseeinheit (60) aufgenommen, verarbeitet und ausgewertet wird.

2. Verfahren nach Anspruch 1, **dadurch gekennzeichnet, dass** das Abbild (44) der mindestens einen Seitenoberfläche (42) des Werkstücks (40) mittels einer Refraktionseinheit der optischen Einrichtung (20) angepasst wird.

3. Verfahren nach einem der Ansprüche 1 oder 2, **dadurch gekennzeichnet, dass** das Abbild (44) der mindestens einen Seitenoberfläche (42) des Werkstücks (40) mittels mindestens eines Spiegels (21) erzeugt wird.

4. Verfahren nach einem der Ansprüche 1 bis 3, **dadurch gekennzeichnet, dass** das Abbild (44) der mindestens einen Seitenoberfläche (42) des Werkstücks (40) mittels mindestens eines Rundspiegels (21) erzeugt wird.

5. Verfahren nach einem der Ansprüche 1 bis 4, **dadurch gekennzeichnet, dass** mittels der Analyseeinheit (60) gleichzeitig mit dem Abbild (44) der mindestens einen Seitenoberfläche (42) ein Bild der Oberseite (41) des Werkstücks (40) aufgenommen, verarbeitet und ausgewertet wird.

6. Verfahren nach einem der Ansprüche 1 bis 5, **dadurch gekennzeichnet, dass** die optische Einrichtung (20) rotationssymmetrisch ausgebildet ist.

7. Verfahren nach Anspruch 6, **dadurch gekennzeichnet, dass** die Analyseeinheit (60) koaxial mit der Symmetrieachse der optischen Einrichtung (20) angeordnet ist.

8. Verfahren nach einem der Ansprüche 1 bis 7, **dadurch gekennzeichnet, dass** das Werkstück (40) mittels mindestens einer in der optischen Einrichtung (20) integrierten Lichtquelle (26) beleuchtet wird.

9. Verfahren nach Anspruch 8, **dadurch gekennzeichnet, dass** die in der optischen Einrichtung (20) integrierte Lichtquelle (26) rotationssymmetrisch ausgebildet ist.

10. Verfahren nach einem der Ansprüche 1 bis 9, **dadurch gekennzeichnet, dass** zur Beleuchtung des Werkstücks (40) das Licht mittels mindestens eines Diffusors (25) gestreut wird.

11. Verfahren nach einem der Ansprüche 1 bis 10, **dadurch gekennzeichnet, dass** mittels der Analyseeinheit (60) mehrere Bilder desselben Werkstücks (40) aufgenommen, verarbeitet und ausgewertet werden, wobei die Beleuchtung des Werkstücks (40) zur Aufnahme jedes der mehreren Bilder des Werkstücks (40) variiert wird.

12. Verfahren nach einem der Ansprüche 1 bis 11, **dadurch gekennzeichnet, dass** das Werkstück (40) gleichzeitig mittels mindestens zwei Lichtquellen (50, 26) beleuchtet wird, wobei jede Lichtquelle (50, 26) verschiedene Lichteigenschaften aufweist.

13. Vorrichtung (10) zur Werkstückprüfung und/oder -kontrolle, umfassend eine Transporteinrichtung (30) zur Beförderung der Werkstücke (40), mindestens eine Lichtquelle (50) zur Beleuchtung der Werkstücke (40), und eine Analyseeinheit (60) zur Aufnahme, Verarbeitung und Auswertung von Bildern der Werkstücke (40), **dadurch gekennzeichnet,**
**dass** die Vorrichtung (10) eine optische Einrichtung (20) zur Erzeugung eines Abbilds (44) von mindestens einer Seitenoberfläche (42) des Werkstücks (40) umfasst, und
**dass** das erzeugte Abbild (44) der mindestens einen Seitenoberfläche (42) des Werkstücks (40) mittels der Analyseeinheit (60) aufnehmbar, verarbeitbar und auswertbar ist.

14. Vorrichtung nach Anspruch 13, **dadurch gekennzeichnet, dass** die optische Einrichtung (20) eine Refraktionseinheit zur Anpassung des Abbilds (44) der mindestens einen Seitenoberfläche (42) des Werkstücks (40) umfasst.

15. Vorrichtung nach einem der Ansprüche 13 oder 14, **dadurch gekennzeichnet, dass** die Vorrichtung (10) mindestens einen Spiegel (21) zur Erzeugung des Abbilds (44) der mindestens einen Seitenoberfläche (42) des Werkstücks (40) umfasst.

16. Vorrichtung nach einem der Ansprüche 13 bis 15, **dadurch gekennzeichnet, dass** die Vorrichtung (10) mindestens einen Rundspiegel (21) zur Erzeugung des Abbilds (44) der mindestens einen Seitenoberfläche (42) des Werkstücks (40) umfasst.

17. Vorrichtung nach einem der Ansprüche 13 bis 16, **dadurch gekennzeichnet, dass** gleichzeitig mit dem Abbild (44) der mindestens einen Seitenoberfläche (42) ein Bild der Oberseite (41) des Werkstücks (40) mittels der Analyseeinheit (60) aufnehmbar, verarbeitbar und auswertbar ist.

18. Vorrichtung nach einem der Ansprüche 13 bis 17, **dadurch gekennzeichnet, dass** die optische Einrichtung (20) rotationssymmetrisch ausgebildet ist.

19. Vorrichtung nach Anspruch 18, **dadurch gekennzeichnet, dass** die Analyseeinheit (60) koaxial mit der Symmetrieachse der optischen Einrichtung (20) angeordnet ist.

20. Vorrichtung nach einem der Ansprüche 13 bis 19, **dadurch gekennzeichnet, dass** die optische Einrichtung (20) mindestens eine integrierte Lichtquelle (26) zur Beleuchtung des Werkstücks (40) umfasst.

21. Vorrichtung nach Anspruch 20, **dadurch gekennzeichnet, dass** die in der optischen Einrichtung (20) integrierte Lichtquelle (26) rotationssymmetrisch ausgebildet ist.

22. Vorrichtung nach einem der Ansprüche 13 bis 21, **dadurch gekennzeichnet, dass** die Vorrichtung (10) mindestens einen Diffusor (25) zur Streuung des Lichts umfasst.

23. Vorrichtung nach einem der Ansprüche 13 bis 22, **dadurch gekennzeichnet, dass** mehrere Bilder desselben Werkstücks (40) mittels der Analyseeinheit (60) aufnehmbar, verarbeitbar und auswertbar sind, wobei die Beleuchtung des Werkstücks (40) zur Aufnahme jedes der mehreren Bilder des Werkstücks (40) variierbar ist.

24. Vorrichtung nach einem der Ansprüche 1 bis 23, **dadurch gekennzeichnet, dass** das Werkstück (40) gleichzeitig mittels mindestens zwei Lichtquellen (50, 26) beleuchtbar ist, wobei jede Lichtquelle (50, 26) verschiedene Lichteigenschaften aufweist.
